Europäisches Patentamt

European Patent Office

Office européen des brevets

(11) Veröffentlichungsnummer : **0 354 936 B1**

# (12) EUROPÄISCHE PATENTSCHRIFT

(45) Veröffentlichungstag der Patentschrift :
**20.05.92 Patentblatt 92/21**

(21) Anmeldenummer : **88909727.5**

(22) Anmeldetag : **17.11.88**

(86) Internationale Anmeldenummer :
**PCT/DE88/00713**

(87) Internationale Veröffentlichungsnummer :
**WO 89/05439 15.06.89 Gazette 89/13**

(51) Int. Cl.⁵ : **G01D 5/20**

(54) VORRICHTUNG ZUR ERFASSUNG DES WEGS ODER DES DREHWINKELS.

(30) Priorität : **02.12.87 DE 3740800**

(43) Veröffentlichungstag der Anmeldung :
**21.02.90 Patentblatt 90/08**

(45) Bekanntmachung des Hinweises auf die
Patenterteilung :
**20.05.92 Patentblatt 92/21**

(84) Benannte Vertragsstaaten :
**DE FR GB IT SE**

(56) Entgegenhaltungen :
**EP-A- 0 182 322**
**WO-A-86/04731**
**DE-A- 2 951 148**
**US-A- 3 205 485**

(73) Patentinhaber : **ROBERT BOSCH GMBH**
**Postfach 30 02 20**
**W-7000 Stuttgart 30 (DE)**

(72) Erfinder : **DOBLER, Klaus**
**Bettäckerstr. 12**
**W-7016 Gerlingen (DE)**
Erfinder : **HACHTEL, Hansjörg**
**Buchenstr. 4**
**W-7251 Weissach (DE)**

## Beschreibung

### Stand der Technik

Die Erfindung geht aus von einer Vorrichtung zur Erfassung des Wegs oder des Drehwinkels nach der Gattung des Hauptanspruchs. Es ist bereits eine Vorrichtung dieser Art bekannt, bei der auf einem feststehenden Körper eine Spule angeordnet ist und zwischen diesem und einem zweiten Körper eine Blende bewegt wird. Auf der der Spule zugewandten Seite der Blende und auf einem halbkreisförmigen Bereich der ebenfalls der Spule zugewandten Stirnseite des zweiten Körpers ist eine Schicht aus elektrisch leitfähigem Material angeordnet. Wird die Spule von einem hochfrequenten Wechselstrom durchflossen, so bilden sich auf den Schichten Wirbelströme aus. Bedingt durch die Abschirmwirkung der Blende wird durch die Blendenposition die Höhe der Meßsignalspannung bestimmt und somit die Position eines an der Blende angeordneten Maschinenteils angezeigt. Dabei können axiale Verschiebungen, z.B. durch ein Lagerspiel oder durch Taumelbewegung der Blende, die Größe der Wirbelstromausbildung und somit die Meßsignalspannung beeinflussen. Dies kann zu einer Abweichung von der Kennlinie des Meßspannungsverlaufs führen und Meßfehler hervorrufen.

Aus der DE-A 29 51 148 ist eine Meßeinrichtung für einen Drehwinkel und/oder ein Drehmoment bekannt, die aus zwei relativ zueinander bewegbaren Scheiben mit Schlitzen besteht. In unmittelbarer Nähe der beiden Körper ist eine von einem hochfrequenten Wechselstrom durchflossene koaxiale Spule angeordnet. Aufgrund des zwischen den beiden Körpern auftretenden Verdrehwinkels ändert sich auch das Überdeckungsverhältnis der Schlitze der beiden Körper. Dadurch ändert sich auch die Größe der entstehenden Wirbelströme, so daß die Induktivität der Meßspule beeinflußt wird. Das somit erzeugte Meßsignal ist proportional zur relativen Verdrehung der beiden Körper. Da der Meßeffekt auch abhängig ist vom bestand zwischen den beiden Körpern und vom bestand zur Meßspule können durch axiale Schwankungen der Körper Meßfehler entstehen.

### Vorteile der Erfindung

Die erfindungsgemäße Vorrichtung mit den kennzeichnenden Merkmalen des Hauptanspruchs hat demgegenüber den Vorteil, daß das Meßsignal nahezu frei von Meßfehlern ist, die auf axiale Verschiebungen oder Taumelbewegungen der Blende zurückzuführen sind. Die Herstellung der Vorrichtung wird vereinfacht, da das Lagerspiel und eventuelle Fabrikationsfehler das Meßsignal nur vernächlässigbar gering beeinflussen. Die Vorrichtung baut preisgünstig.

Durch die in den abhängigen Ausprüchen aufgeführten Maßnahmen sind vorteilhafte Weiterbildungen und Verbesserungen der im Anspruch 1 angegebenen Vorrichtung möglich.

### Zeichnung

Ausführungsbeispiele der Erfindung sind in der Zeichnung dargestellt und in der nachfolgenden Beschreibung näher erläutert. Es zeigen die Figur 1 eine Ausgestaltung der Vorrichtung im Längsschnitt, Figur 2 einen Schnitt in Richtung II, Figur 3 einen Teilschnitt in Richtung III, Figur 4 und 5 je eine Abwandlung des Ausführungsbeispiels.

### Beschreibung der Ausführungsbeispiele

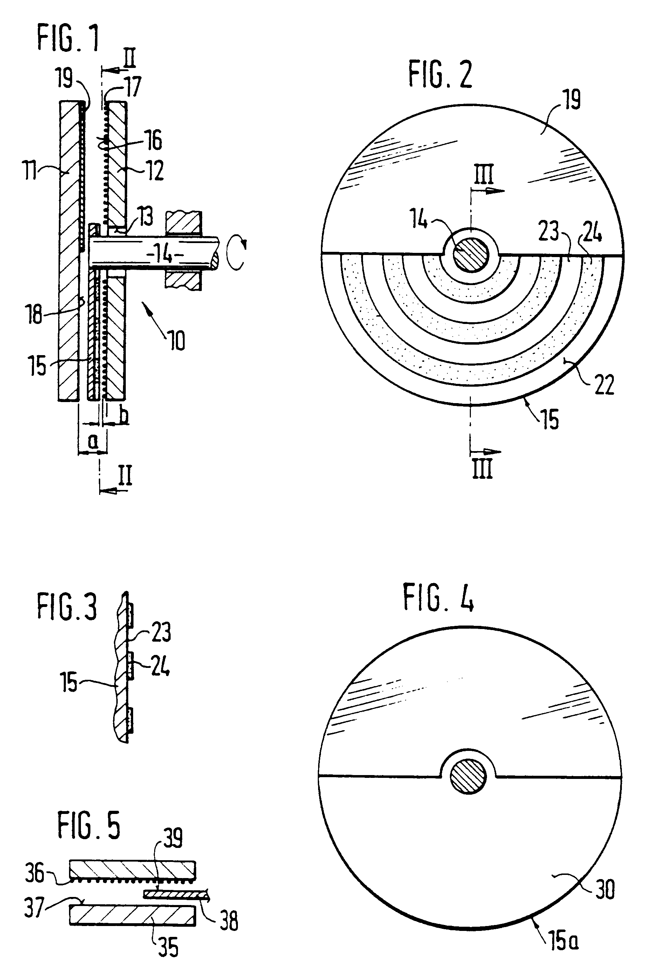

In Figur 1 ist mit 10 eine Vorrichtung zur Bestimmung des Wegs oder des Drehwinkels bezeichnet, wie sie insbesondere als Schiebe- oder Drehpoteniometer verwendet wird. Die Vorrichtung 10 besteht aus zwei in konstantem Abstand "a" zueinander ortsfest angeordneten Scheiben 11, 12. Durch eine mittige, in der Scheibe 12 ausgebildeten Bohrung 13 ragt eine Welle 14. Die Welle 14 führt zu einem nicht dargestellten Maschinenteil, dessen Drehbewegung bestimmt werden soll. An dem sich zwischen den beiden Scheiben 11, 12 befindenden Ende der Welle 14 ist eine halbkreisförmige Blende 15 angeordnet. Auf der inneren Stirnseite 16, d.h. auf der der Scheibe 11 zugewandten Stirnseite der Scheibe 12 befindet sich eine Spule 17, die von einem hochfrequenten Wechselstrom durchflossen wird. Die innere Stirnseite 18 der Scheibe 11 ist halbseitig mit einer elektrisch leitenden Schicht 19 bedeckt.

Auf der der Spule 17 zugewandten Stirnseite 22 der Blende 15 sind halbkreisförmig um die Befestigung der Blende 15 als Mittelpunkt mehrere Streifen 23 aus ferromagnetischem Material und Streifen 24 aus elektrisch leitfähigem, aber nicht ferromagnetischem Material angeordnet. Die Streifen 23, 24 aus den beiden unterschiedlichen Materialien sind in regelmäßiger, sich abwechselnder Reihenfolge vom Rand der Blende zum Mittelpunkt hin aufgebracht. Dabei kann die Blende 15 aus z.B. Fe oder einem Automatenstahl bestehen, auf der die Streifen 24 aufgalvanisiert sind. Auch ist es denkbar, die unterschiedlichen Materialien in anderer geometrischer Anordnung auf der Blende 15 zu verteilen.

Wird die Spule 17 von einem hochfrequenten Wechselstrom durchflossen, so erfaßt das magnetische Wechselfeld der Spule 17 die gesamte Oberfläche der Blende 15. Bei den Schichten 24 aus nicht ferromagnetischen, aber elektrisch leitendem Material wirkt nur der Wirbelstromeffekt. Hingegen bei den Schichten 23 aus ferromagnetischem Material wirkt sowohl der induktive magnetostatische als auch der Wirbelstromeffekt. Während der induktive Effekt eine Erhöhung der Induktivität der Spule 17 bewirkt, ruft der Wirbelstromeffekt eine Verminderung der Induktivität der Spule 17 hervor. Die beiden Effekte wirken also gegensätzlich. Ferner nimmt mit steigender Frequenz $f_T$ ($f_T$ = Frequenz des Wechselstromes der die Spule durchfließt) der Wirbelstromeffekt zu, während sich die Permeabilität verkleinert. Würde die Spule 17 nur der nicht ferromagnetischen Schicht 24 gegenüberstehen, bzw. betrachtet man nur isoliert die Wechselwirkung zwischen dieser Schicht 24 und der Spule 17, so erniedrigt sich aufgrund des Wirbelstromeffektes der Wirbelstromwiderstand der Spule und somit - bei entsprechender Auswerteschaltung - die Meßspannung $U_M$. Steht hingegen die Spule 17 isoliert der ferromagnetischen Schicht 23 gegenüber, so würde sich die Meßspannung $U_M$ erhöhen, sofern der induktive Effekt dominiert. Der jeweilige Effekt ist aber abhängig vom Abstand "b" zwischen der Spulenoberfläche und der Oberfläche der Schichten 23 bzw. 24. Treten durch Toleranzen bei der Fabrikation oder durch Lagerspiel Axialverschiebungen bzw. Taumelbewegungen der Blende 15 auf, so wird während der Drehbewegung der Abstand "b" verändert. Alleine durch die Veränderung des Abstands "b", d.h. durch die Veränderung des Luftspalts wird aufgrund des induktiven bzw. des Wirbelstromeffektes die Meßspannung $U_M$ verändert. Diese Veränderung der Meßspannung ist aber sowohl beim induktiven als auch beim Wirbelstromeffekt nicht linear vom Abstand "b" abhängig, sondern die Meßspannung wird unkontrolliert erhöht bzw. erniedrigt. Das Meßsignal wird dadurch verfälscht. Werden die beiden Schichten 23, 24 nun so aufeinander abgestimmt, daß bei der zur Messung erforderlichen Trägerfrequenz $f_T$ sich die gegensätzlich wirkenden Effekte nahezu aufheben, so können die durch axiale Verschiebung erzeugten Meßfehler nahezu vollständig eliminiert werden. Dazu sind unter anderem die Form, das Material bzw. die Schichtstärke abhängig von der Frequenz des angelegten Wechselstroms so aufeinander abzustimmen, daß sich bei einer axialen Verschiebung der Widerstandswert der Spule 17 nicht oder nur vernachlässigbar ändert. Dadurch erhält man eine berührungsfrei arbeitende Vorrichtung, deren Meßspannung durch axiale Verschiebung oder Taumelbewegung nicht beeinflußt wird. Insbesondere wird die durch einen induktiven Effekt erzeugte Spannung durch Überlagerung mit einem Wirbelstromeffekt eliminiert.

Bei der Drehbewegung der Welle 14 ist die Meßsignalspannung von der Größe der erzeugten Wirbelströme abhängig, die wiederum bestimmt wird von der Größe der Fläche der Schicht 19 auf der Scheibe 11. Überdeckt die Blende 15 die metallische Schicht 19 auf der Scheibe 11, so können sich auf der von der Blende 15 überdeckten Fläche der Schicht 19 keine oder nur relativ vernachlässigbare Wirbelströme ausbilden. Die Drehung der Welle bestimmt die tangentiale Position der Blende 15 und die Höhe der Meßsignalspannung.

Es ist auch denkbar, die Streifen 23, 24 auf der der Spule 17 abgewandten Seite der Blende 15 aufzubringen. Dabei muß aber die der Spule 17 zugewandte Seite aus elektrich nicht leitendem Material, z.B. Kunststoff oder Keramik, bestehen. Für eine zusätzliche Fehlerkompensation, insbesondere von Temperatureffekten, können statt einer einzigen Spule 17 auch zwei Spulen, die in Differenzschaltung untereinander verschaltet sind auf der Stirnseite 17 der Scheibe 12 angeordnet sein.

Ferner ist es auch möglich, wie in Figur 4 dargestellt, auf der Blende 15a eine Schicht 30 aus nur ferromagnetischem Material aufzubringen. Dabei ist die Spule 17 von einer Trägerfrequenz $f_{T2}$ zu betreiben, bei der sich der Wirbelstromeffekt und der induktive Effekt gegenseitig aufheben. Dabei ist die Höhe der Trägerfrequenz abhängig von den elektrischen Eigenschaften des ferromagnetischen Materials.

Es ist auch möglich, die Vorrichtung 10 zur Bestimmung von linearen Bewegungen auszubilden. Hierzu ist in Figur 5 ein Träger 35 dargestellt, der an seiner einer Spule 36 zugewandten Oberfläche 37 mit einem elektrisch leitenden Material bedeckt ist, bzw. der Träger 35 selbst aus elektrisch leitendem Material hergestellt ist. Ein Meßelement 38, das in seiner Wirkung der Blende 15 entspricht, ist mit einem nicht dargestellten Maschinenteil verbunden und wird zwischen Träger 35 und der Spule 36 bewegt. Die der Spule 36 zugewandte Oberfläche 39 des Meßelements 38 ist wie die Oberfläche der Blende 15 mit Streifen oder einem entsprechenden Muster aus ferromagnetischen und nicht ferromagnetischen aber elektrisch leitfähigem Material beschichtet. Das Meßprinzip ist wie bereits oben beschrieben.

## Patentansprüche

1. Vorrichtung (10) zur Erfassung des Wegs oder des Drehwinkels, mit mindestens einer auf einem Körper (12) angeordneten Spule (17), einem zweiten Körper (11), der mindestens auf der der Spule (17) zugewandten Seite einen Bereich (19) aus elektrisch leitendem Material aufweist, und einer an einem Maschinenteil angeordneten, zwischen und relativ zu den beiden Körpern (11 12) beweglichen Blende (15), durch die bei der Relativbewegung die Induktivität der Spule (17) beeinflußt wird, dadurch gekennzeichnet, daß auf der Blende (15) abwechselnd Bereiche aus elektrisch leitfähigem, aber nicht ferromagnetischem Material (24) und Bereiche (23) aus ferromagnetischem Material so angeordnet sind, daß bei von einem Wechselstrom mit einer Frequenz $(f_T)$ durchflossenen Spule (17) die durch axiale Schwankungen der Blende (15) auftretenden induktiven Effekte und Wirbelstromeffekte sich in ihrer elektrischen Wirkung kompensieren.

2. Vorrichtung (10) zur Erfassung des Wegs oder des Drehwinkels, mit mindestens einer auf einem Körper (12) angeordneten Spule (17), einem zweiten Körper (11), der mindestens auf der der Spule (17) zugewandten Seite einen Bereich (19) aus elektrisch leitendem Material aufweist, und einer an einem Maschinenteil angeordneten, zwischen und relativ zu den beiden Körpern (11 12) beweglichen Blende (15), durch die bei der Relativbewegung die Induktivität der Spule (17) beeinflußt wird, dadurch gekennzeichnet, daß auf der Blende (15a) ein ferromagnetisches, elektrisch leitendes Material (30) aufgebracht ist und die Spule (17) von einem Wechselstrom mit einer Frequenz $(f_T)$ durchflossen ist, bei der sich die durch axiale Schwankungen der Blende (15a) auf dem Material (30) entstehenden gegensätzlichen induktiven Effekte und Wirbelstromeffekte in ihrer elektrischen Wirkung kompensieren.

3. Vorrichtung nach Anspruch 1, dadurch gekennzeichnet, daß die Bereiche (23, 24) zentrisch zu einem Drehmittelpunkt der Blende (15) in regelmäßiger Reihenfolge abwechselnd verlaufen.

4. Vorrichtung nach einem der Ansprüche 1 oder 3, dadurch gekennzeichnet, daß die der Spule (17) abgewandte Stirnseite der Blende (15) in Bereiche (23, 24) unterteilt ist und die der Spule (17) zugewandte Stirnseite der Blende (15) aus elektrisch nicht leitendem Material besteht.

5. Vorrichtung nach einem der Ansprüche 1 oder 3, dadurch gekennzeichnet, daß die der Spule (17) zugewandte Stirnseite der Blende (15) in Bereiche (23, 24) unterteilt ist.

6. Vorrichtung nach einem der Ansprüche 1 bis 5, dadurch gekennzeichnet, daß die Blende (15) halbkreisförmig ausgebildet ist und drehbar an einer Welle (14) befestigt ist, daß die beiden Körper (11, 12) scheibenförmig ausgebildet sind, die innere Stirnseite des zweiten Körpers (11) halbseitig mit einer elektrisch leitenden Schicht bedeckt ist und die Vorrichtung (10) zum Bestimmen von Drehwinkeln dient.

7. Vorrichtung nach einem der Ansprüche 1 bis 5, dadurch gekennzeichnet, daß die Körper (11, 12) plattenförmig ausgebildet sind und die Vorrichtung (10) zum Bestimmen von linearen Bewegungen dient.

8. Vorrichtung nach einem der Ansprüche 1 bis 7, dadurch gekennzeichnet, daß auf dem Körper (12) zwei in Differenzschaltung zueinander geschaltete Spulen aufgebracht sind.

## Claims

1. Device (10) for detecting the linear movement or rotation angle, having at least one coil (17) arranged on a body (12), a second body (11), which has a region (19) of electrically conductive material, at least on the side facing the coil (17), and a diaphragm (15) which is arranged on a machine part and moves between and relative to the two bodies (11, 12), by means of which the inductance of the coil (17) is influenced during relative movement, characterised in that regions of material (24) which is electrically conductive but not ferromagnetic and regions (23) of ferromagnetic material are arranged in an alternating manner on the diaphragm (15) such that, when an alternating current having a frequency $(f_T)$ flows through the coil (17), the inductive effects and eddy-current effects occurring due to axial fluctuations of the diaphragm (15) compensate for each other in their electrical effect.

2. Device (10) for detecting the linear movement or rotation angle, having at least one coil (17) arranged on a body (12), a second body (11), which has a region (19) of electrically conductive material, at least on the side facing the coil (17), and a diaphragm (15) which is arranged on a machine part and moves between and relative to the two bodies (11, 12), by means of which the inductance of the coil (17) is influenced during relative movement, characterised in that a ferromagnetic, electrically conductive material (30) is applied on the diaphragm (15a) and an alternating current having a frequency $(f_T)$ flows through the coil (17), at which frequency $(f_T)$ the opposing inductive effects and eddy-current effects occurring on the material (30) due to axial fluctuations of the diaphragm (15a) compensate for each other in their electrical effect.

3. Device according to Claim 1, characterised in that the regions (23, 24) run in an alternating sequence centrally with respect to a centre of rotation of the diaphragm (15).

4. Device according to one of Claims 1 or 3, characterised in that the end face, facing away from the coil (17), of the diaphragm (15) is divided into regions (23, 24) and the end face, facing the coil (17), of the diaphragm (15) consists of electrically non-conductive material.

5. Device according to one of Claims 1 or 3, characterised in that the end face, facing the coil (17), of the diaphragm (15) is divided into regions (23, 24).

6. Device according to one of Claims 1 to 5, characterised in that the diaphragm (15) is of semicircular design and is mounted rotatably on a shaft (14), in that the two bodies (11, 12) are of disc-shaped design, the inner end face of the second body (11) is covered on half its face by an electrically conductive layer, and the device (10) is used for determining rotation angles.

7. Device according to one of Claims 1 to 5, characterised in that the bodies (11, 12) are of plate-shaped design and the device (10) is used for determining linear movements.

8. Device according to one of Claims 1 to 7, characterised in that two coils, connected to one another in a differential circuit, are fitted on the body (12).

**Revendications**

1. Dispositif (10) pour détecter le parcours ou la position angulaire à l'aide d'au moins une bobine (17) prévue sur un organe (12) ainsi que d'un second organe (11) qui comporte au moins pour sa face tournée vers la bobine (17), une sone (19) en un matériau conducteur d'électricité et un diaphragme (15), mobile, monté sur une partie ou pièce de machine et se déplaçant entre les deux organes (11, 12) et par rapport à ceux-ci, ce mouvement relatif influençant l'inductance de la bobine (17), dispositif caractérisé en ce que le diaphragme (15) comporte des sones alternées en un matériau (24) conducteur d'électricité mais non ferromagnétique et des sones (23) en un matériau ferromagnétique, et lorsque la bobine (17) est traversée par un courant alternatif de fréquence ($f_T$), les effets d'induction engendrés par les variations axiales du diaphragme (15) et les effets de courants de Foucault se compensent dans leur action électrique.

2. Dispositif (10) pour détecter le parcours ou la position angulaire à l'aide d'une bobine (17) prévue sur au moins un organe (12), ainsi qu'un second organe (11) qui au moins du côté tourné vers la bobine (17) comporte une sone (19) en un matériau conducteur d'électricité et un diaphragme (15) porté sur une partie ou une pièce de machine, placée entre les deux organes (11, 12) et mobile par rapport à ceux-ci, le mouvement relatif influençant l'inductance de la bobine (17), dispositif caractérisé en ce qu'un matériau (30) conducteur d'électricité, ferromagnétique est prévu sur le diaphragme (15a) et la bobine (17) est traversée par un courant alternatif de fréquence ($f_T$) et les effets inductifs et les effets de courants de Foucault, opposés engendrés par les variations axiales du diaphragme (15a) se compensent dans leur action électrique sur le matériau (30).

3. Dispositif selon la revendication 1, caractérisé en ce que les sones (23, 24) sont prévues de manière centrée sur le centre du diaphragme (15) et suivant une succession alternant de manière régulière.

4. Dispositif selon l'une des revendications 1 ou 3, caractérisé en ce que la face frontale du diaphragme (15) tournée vers la bobine (17) est subdivisée en sones (23, 24) et la face frontale du diaphragme (15) tournée vers la bobine (17) est réalisée en un matériau non conducteur d'électricité.

5. Dispositif selon l'une des revendications 1 ou 3, caractérisé en ce que la face frontale du diaphragme (15) tournée vers la bobine (17) est subdivisée en sones (23, 24).

6. Dispositif selon l'une des revendications 1 à 5, caractérisé en ce que le diaphragme (15) est de forme semi-circulaire et est fixé à rotation sur un axe (14) et les deux organes (11, 12) sont en forme de disques, la surface frontale intérieure du second organe (12) étant revêtue sur une moitié d'une couche conductrice d'électricité et le dispositif (10) sert à déterminer l'angle de rotation.

7. Dispositif selon l'une des revendications 1 à 5, caractérisé en ce que les organes (11, 12) sont en forme de plaques et le dispositif (10) sert à déterminer des mouvements linaires.

8. Dispositif selon l'une des revendications 1 à 7, caractérisé par deux bobines branchées suivant un montage différentiel sur l'organe (12).

FIG.1

FIG. 2

FIG.3

FIG. 4

FIG.5